# EUROPÄISCHE PATENTSCHRIFT

(11) **EP 2 899 872 B1**
(45) Veröffentlichungstag und Bekanntmachung des Hinweises auf die Patenterteilung: **12.09.2018**
(21) Anmeldenummer: 14000279.1
(22) Anmeldetag: 27.01.2014
(51) Int. Cl.: H02P 29/024, H02P 7/292, H02P 3/08

(54) **Versorgungssystem für einen Gleichstromantrieb und Verfahren zur sicherheitsrelevanten Abschaltung eines Gleichstromantriebs**
Supply system for a DC drive and method for the safety-relevant shutdown of a direct current drive
Système d'alimentation pour un entraînement à courant continu et procédé de désactivation de sécurité d'un entraînement à courant continu

(43) Veröffentlichungstag der Anmeldung: 29.07.2015
(73) Patentinhaber: ABB AG, 68309 Mannheim (DE)
(72) Erfinder: Werle, Ludwig, 69123 Heidelberg (DE); Schleger, Christian, 68309 Mannheim (DE); Rimann, Eberhard, 64646 Heppenheim (DE)

(56) Entgegenhaltungen:
- WO-A1-2009/080384
- "DCS Thyristorstromrichter", , 1. Oktober 2003 (2003-10-01), XP055127519, Gefunden im Internet: URL:http://library.abb.com/global/scot/sco t204.nsf/veritydisplay/8f923b6d4159a4f1c12 56f8c00446c8b/$File/3ADW000095R0703_DCS400 _Manual_d_g.pdf [gefunden am 2014-07-08]
- PETER WRATIL ED - ANONYMOUS: "Technology of safe Drives", INDUSTRIAL INFORMATICS, 2007 5TH IEEE INTERNATIONAL CONFERENCE ON, IEEE, PI, 1. Juli 2007 (2007-07-01), Seiten 155-161, XP031161785, ISBN: 978-1-4244-0850-4

## Beschreibung

Die Erfindung betrifft ein Versorgungssystem für einen Gleichstromantrieb, umfassend einen Stromrichter für wenigstens einen richtungsabhängigen Zweiquadrantenbetrieb, wenigstens eine zugehörige pulsbasierte Ansteuervorrichtung, einen eingangsseitigen und einen ausgangsseitigen Anschluss für den Stromrichter, wenigstens eine mechanische Unterbrechungsvorrichtung für den ein- und/oder ausgangsseitigen Anschluss, wobei das Versorgungssystem dafür vorgesehen ist, kontinuierlich Werte eines im Betrieb ausgangsseitig fließenden Stromes bereit zu stellen. Die Erfindung betrifft auch ein Verfahren zur sicherheitsrelevanten Abschaltung eines Gleichstromantriebs in einem derartigen Versorgungssystem.

Es ist allgemein bekannt, dass das Betreiben von Gleichstromantrieben in der Regel mittels Stromrichtern erfolgt, welche entweder von einer Wechselspannungsquelle oder aber auch von einer Gleichspannungsquelle versorgt werden. Mittels eines typischerweise im Phasenanschnitt betriebenen Stromrichters wird ein variabler Gleichstrom erzeugt, durch welchen der Gleichstromantrieb den jeweiligen Anforderungen entsprechend betrieben werden kann. Ein typisches Beispiel für einen Stromrichter ist eine thyristorbestückte B6 Brücke. Industrielle Gleichstromantriebe weisen beispielsweise eine Nennspannung im Bereich bis 1500V bei einer elektrischen Leistung von bis zu 20MVA auf, wobei anwendungsbedingt auch erheblich davon abweichende Kenndaten auftreten können.

Im Falle einer sicherheitsrelevanten Abschaltung eines Gleichstromantriebes ist dafür zu sorgen, dass dessen treibendes Drehmoment möglichst schnell zu Null wird, um so das Risiko einer möglichen Gefährdung umgehend auszuschließen. Hierzu ist es ausreichend, dass entweder der Ankerstrom oder auch der Feldstrom zu Null abgeklungen ist. Eine derartige Funktionalität wird üblicher Weise als "Safe Torque Off" (STO) Funktion bezeichnet. Erfindungsgemäß ist hierbei insbesondere eine Reduktion des Ankerstromes von Interesse, welcher von dem Stromrichter eingespeist wird.

Da ein netzgeführter Stromrichter zumindest bei hoher Ausgangsspannung im Rückspeisebetrieb (beim Bremsen der Gleichstrommaschine) nicht unmittelbar stromlos gemacht werden kann, ist ein entsprechender Zeitraum erforderlich, in welchem der Strom abgebaut werden kann. Ein entsprechender sicherheitstechnisch maximal zulässiger Zeitraum vom Geben eines Signals zum Einleiten der STO Funktion bis hin zur Reduktion des Drehmoments des Gleichstromantriebes auf einen Wert von null liegt abhängig von den jeweiligen Randbedingungen beispielsweise im Bereich von 500ms bis 1000ms.

Gemäß dem Stand der Technik wird mit Geben eines STO Signals die Ausgangsspannung der Ankerversorgung so eingestellt, dass der Strom möglichst schnell kleiner wird und sich innerhalb des genannten exemplarischen Zeitintervalls der Ankerstrom abbauen kann. Nach Ablauf dieses Intervalls erfolgt dann mittels einer mechanischen Unterbrechungsvorrichtung, beispielsweise einem Schütz, ein Abkoppeln des Stromrichters von dem Gleichstromantrieb und/oder ein Abkoppeln des Stromrichters von dessen Einspeisung. Das Patentdokument EP 2220757 B1 beschäftigt sich beispielsweise ebenfalls mit dieser Problematik.

Das Dokument *"*DCS Thyristorumrichter" (1. Oktober 2003) ist ein Handbuch zum DCS Thyristorsteller DCS 400 der Firma ABB und beschäftigt sich ebenfalls mit der Thematik des Abschaltens von Gleichstrommotoren, welche auch vom Dokument *Peter* Wratil Ed - Anonymous: "Technology of safe Drives", INDUSTRIAL INFOR-MATICS, 2007 5TH IEEE INTERNATIONAL CONFERENCE ON, IEEE, PI, 1 Juli 2007, Seiten 155 - 161 XP031161785, ISBN: 978-1-4244-0850-4 behandelt wird.

Als nachteilig erweist sich hierbei, dass - insbesondere im eingangs erwähnten höheren Leistungsbereich der Gleichstromantriebe - die maximal zulässige Schaltspielzahl von mechanischen Unterbrechungsvorrichtungen relativ gering ist, bevor diese ausgetauscht beziehungsweise zumindest gewartet werden müssen. Je nach betriebsbedingter Häufigkeit des Initiierens einer Safe Torque Off (STO) Funktion
kann es zu einem übermäßigen Verschleiß der Unterbrechungsvorrichtungen kommen.

Ausgehend von diesem Stand der Technik ist es Aufgabe der Erfindung, ein Versorgungssystem für einen Gleichstromantrieb und ein entsprechendes Verfahren zur sicherheitsrelevanten Abschaltung eines Gleichstromantriebs bereitzustellen, welches diesen Nachteil vermeidet.

Diese Aufgabe wird gelöst durch die Merkmale des Anspruchs 1.

Die Grundidee der Erfindung besteht darin, das Moment beziehungsweise den ausgangsseitig fließenden Strom bereits innerhalb des ersten Zeitintervalls mittels einer geeignet eingestellten Ausgangsspannung des Stromrichters bereits auf null oder zumindest unterhalb eines nahe null liegenden sicherheitskritischen Grenzwertes zu bringen. Eine derartige Ansteuerungsvariante des Stromrichters wird als Wechselrichtergrenzlage bezeichnet.

Je nach äußeren Randbedingungen, insbesondere beim regulären Betrieb des Gleichstromantriebes, ist damit zu rechnen, dass dies innerhalb des ersten Zeitraums von beispielsweise 300ms gelingen wird. Erfindungsgemäß wird daher bewusst bei bereits innerhalb des ersten Zeitraums erfolgreichem Abbau des ausgangsseitigen Stromes beziehungsweise des treibenden Momentes auf ein Schalten der mechanischen Unterbrechungsvorrichtungen verzichtet, ohne dabei sicherheitsrelevante Aspekte zu beeinträchtigen.

Insbesondere im Fehlerfall, beispielsweise bei einem Kurzschluss mit entsprechend erhöhtem Kurzschlussstrom und gegebenenfalls damit verbundenen Wechselrichterkippen, kann jedoch nicht davon ausgegangen werden, dass der ausgangsseitig fließende Strom innerhalb des sicherheitskritischen Zeitintervalls, welches sich letztendlich aus der Summe von erstem und zweitem Zeitintervall zusammensetzt und beispielsweise 500ms beträgt, auf null oder zumindest nahe null abgeklungen ist.

Um dennoch allen sicherheitsrelevanten Anforderungen zu entsprechen, ist es daher erfindungsgemäß für diesen Fall vorgesehen, nach Ablauf des zweiten Zeitintervalls durch Betätigen der Unterbrechungsvorrichtung(en) den Stromrichter vom Gleichstromantrieb und/oder vom speisenden Netz zu entkoppeln, sofern der ausgangsseitige Strom dann noch immer nicht unterhalb des sicherheitskritischen Grenzwertes abgeklungen ist.

Das zweite Zeitintervall kann prinzipiell beliebig kurz gestaltet werden, jedoch ist zu beachten, dass ein Bereitstellen von zuverlässigen Werten eines im Betrieb ausgangsseitig fließenden Stromes ebenfalls einen gewissen Zeitraum benötigt. Um mit hoher Sicherheit eventuelle Fehlbestimmungen eines derartigen Wertes auszuschließen, sollte der Stromverlauf bei der Ermittlung eines jeweiligen Wertes idealerweise über einen bestimmten Zeitraum, beispielsweise 10ms oder 20ms betrachtet werden.

Zur technischen Realisation einer derartigen Funktionalität kann beispielsweise eine Rechenvorrichtung verwendet werden, welche dafür vorgesehen ist, ein jeweiliges STO Signal zu empfangen, die kontinuierlich zur Verfügung gestellten Stromwerte auszuwerten und bedarfsweise auf die Ansteuervorrichtung einzuwirken beziehungsweise auch ein Abschalten der Unterbrechungsvorrichtungen zu initiieren. Eine derartige Rechenvorrichtung lässt sich beispielsweise als zusätzliche Einbschubplatine in ein ohnehin vorhandenes Steuergerät für einen Gleichstromantrieb implementieren oder gegebenenfalls als zusätzliche Softwarefunktion eines solchen Steuergerätes, welche mit der bereits vorhandenen Hardware des Steuergerätes auskommt.

Erfindungsgemäß wird damit ein mechanisches Betätigen der Unterbrechungsvorrichtungen vermieden, sofern es nicht sicherheitsrelevant ist. Die Anzahl der betriebsmäßig auftretenden Schaltzyklen wird damit in vorteilhafter Weise reduziert.

Gemäß einer weiteren Ausgestaltung des erfindungsgemäßen Versorgungssystems ist ausgangsseitig eine Messvorrichtung zur Erfassung einer jeweiligen ersten Kenngröße für den ausgangsseitig fließenden Strom vorgesehen. Eine derartige Messvorrichtung kann beispielsweise ein Strommessgerät sein, welches einen Spannungsabfall über einen ohmschen Messwiderstand misst, welcher von dem zu messenden Strom durchflossen wird. Ein ausgangsseitiges Messen des ausgangsseitigen Stromes ist eine einfache Bestimmungsmethode für diesen, welche besonders wenig Fehlertoleranzen unterworfen ist.

Entsprechend einer anderen Variante des erfindungsgemäßen Versorgungssystems ist eingangsseitig eine Messvorrichtung vorgesehen, anhand deren gemessener Werte eine jeweilige zweite Kenngröße für den ausgangsseitig fließenden Strom ermittelbar ist. So lässt sich beispielsweise anhand einer eingangsseitigen dreiphasigen Wechselstrommessung auf einen ausgangsseitigen Gleichstromwert schließen. Insbesondere kann aber auch auf ein bereits erfolgtes Abklingen des treibenden Momentes geschlussfolgert werden, wenn dem Stromrichter eingangsseitig keine Wirkleistung mehr zugeführt wird, beziehungsweise lediglich eine Wirkleistung, welche die elektrischen Verluste des Stromrichters deckt.

Gemäß einer weiteren erfindungsgemäßen Variante des Versorgungssystems wird als Kriterium für ein Abklingen des ausgangsseitig fließenden Stromes unterhalb des sicherheitskritischen Grenzwertes eine logische UND Verknüpfung eines jeweiligen Unterschreitens von erster und zweiter Kenngröße verwendet. Somit müssen, dass es nicht zu einer Auslösung der Unterbrechungsvorrichtung kommt, sowohl die erste als auch die zweite Kenngröße unterhalb des sicherheitskritischen Wertes abgeklungen sein. Idealerweise entsprechen sich zwar erste und zweite Kenngröße, durch eine derartige Redundanz beziehungsweise Diversität verschiedener Ermittlungsmethoden wird die Zuverlässigkeit des Systems jedoch weiter gesteigert. Selbstverständlich ist auch eine Verknüpfung beliebiger anderer Kenngrößen denkbar, welche den ausgangsseitig fließenden Strom beschreiben.

Bei pulsbasierten Stromrichtern werden die Ansteuersignale der Halbleiterschalter gebildet aus Stromrichtungssignalen und Pulsen, jeweils entsprechend ihrer Phasenlage. Erst das gleichzeitige Vorliegen von Stromrichtungssignalen und Pulsen ermöglicht ein Ansteuern der Halbleiterschalter. Wenn wenigstens eines dieser beiden Signale nicht vorliegt, so werden die Halbleiterschalter nicht angesteuert und es erfolgt damit auch keine Zuführung von Ansteuerenergie.

Entsprechend einer weiteren Variante des erfindungsgemäßen Versorgungssystems ist der Stromrichter für einen Vierquadrantenbetrieb vorgesehen. Ein Vierquadrantenbetrieb ermöglicht einen Motor- und einen Generatorbetrieb der Antriebsvorrichtung in beiden möglichen Drehrichtungen und ist damit besonders flexibel.

Gemäß einer weiteren Erfindungsvariante erfolgt das Erkennen eines Abklingens des ausgangsseitig fließenden Stromes unterhalb des sicherheitskritischen Grenzwertes anhand von Spannungsmessungen über den Halbleiterschaltern des Stromrichters. Wenn beispielsweise für einen Zeitraum gleichzeitig eine jeweilige Spannung über alle Halbleiterschalter anliegt, so kann daraus geschlussfolgert werden, dass alle Halbleiterschalter jeweils nicht leitend sind, kein Strom durch diese fließt und damit auch ausgangsseitig kein Strom fließt.

In besonders bevorzugter Weise ist das Versorgungssystem eingangsseitig für eine dreiphasige Einspeisung vorgesehen. Energieverteilungsnetze sind sehr häufig als dreiphasiges Wechselstromnetz ausgeführt, womit ein dreiphasiges Versorgungssystem dann einfach daran anzuschließen ist. In diesem Fall lässt sich der Stromrichter zudem in besonders vorteilhafter Weise als B6 Brücke ausführen. Es sind aber selbstverständlich auch Varianten mit einphasiger Einspeisung oder auch mit einem Gleichstromzwischenkreis denkbar.

Gemäß einer weiteren Variante des Versorgungssystems ist dieses dafür vorgesehen zwei oder auch mehr voneinander unabhängige STO Signale zu empfangen und zu berücksichtigen. Dies erfolgt vorzugsweise auf voneinander unabhängigen Kanälen des Versorgungssystems, so dass damit eine Redundanz gebildet ist, welche die Betriebssicherheit weiter erhöht.

Einer weiteren Erfindungsvariante folgend liegt das erste Zeitintervall im Bereich von 50ms bis 500ms. Die untere Grenze dieses Zeitintervalls sollte aus sicherheitsrelevanten Gründen auf der einen Seite so niedrig wie möglich sein, so dass eine Abschaltung möglichst schnell erfolgen kann. Auf der anderen Seite muss jedoch genügend Zeit zur Verfügung gestellt werden, dass ein ausgangsseitiger Gleichstrom nach Empfangen eines STO Signals aufgrund der daraufhin erfolgten Einstellung des Stromrichterbetriebes in die Wechselrichtergrenzlage bereits mit einer höheren Wahrscheinlichkeit abgeklungen sein kann.

Die Obergrenze des ersten Zeitintervalls ergibt sich in Summe mit dem zweiten Zeitintervall aus sicherheitsrelevanten Erwägungen, wie lange eine Abschaltung eines jeweiligen Gleichstromantriebes maximal dauern darf. Der angegebene Zeitbereich ist für die meisten Anwendungsfälle geeignet, je nach gegebenen Randbedingungen sind jedoch auch davon abweichende Werte denkbar und sinnvoll.

Die erfindungsgemäße Aufgabe wird auch gelöst durch ein Verfahren nach Anspruch 10.

Die Vorteile des erfindungsgemäßen Verfahrens entsprechen den zuvor genannten Vorteilen des erfindungsgemäßen Versorgungssystems. Demgemäß wird erreicht, dass die Unterbrechungsvorrichtungen bei Empfangen eines STO Signals lediglich dann geschaltet werden, wenn dies aus Gründen der Sicherheit auch notwendig ist. Die Anzahl der betriebsmäßig auftretenden Schaltspiele der Unterbrechungsvorrichtungen wird dadurch in vorteilhafter Weise reduziert.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden. Es zeigen:
- Fig. 1: ein exemplarisches Versorgungssystem für einen Gleichstromantrieb sowie
- Fig. 2: einen exemplarischen Zeitablauf.

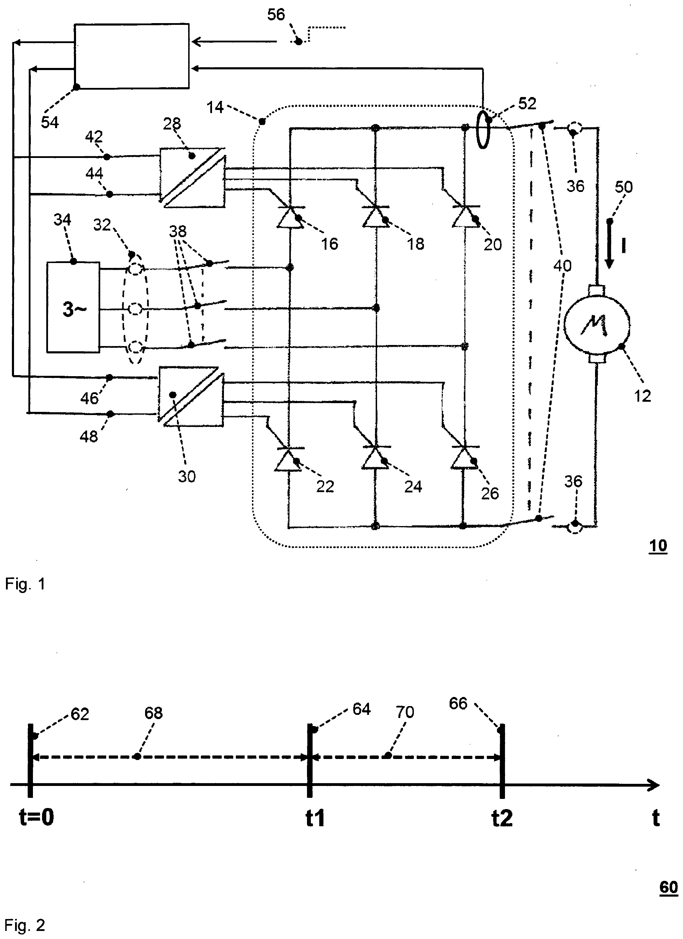

Fig. 1 zeigt ein exemplarisches Versorgungssystem 10 für einen Gleichstromantrieb 12. Kern des Versorgungssystems bildet ein Stromrichter 14, in diesem Fall eine B6 Brückenschaltung mit 6 Halbleiterschaltern 16, 18, 20, 22, 24, 26. Gespeist wird der Stromrichter 14 über einen eingangsseitigen dreipoligen Anschluss 32 von einem dreiphasigen Versorgungsnetz 34, welches beispielsweise eine Nennspannung von 1kV aufweist. Ausgangsseitig ist über einen ausgangsseitigen Anschluss 36 der Gleichstromantrieb 12 an den Stromrichter 14 angeschlossen. Eingangsseitig ist eine dreipolige Unterbrechungsvorrichtung 38 zur galvanischen Trennung des Stromrichters 14 vom Versorgungsnetz 34 vorgesehen. Ausgangsseitig ist eine zweipolige Unterbrechungsvorrichtung 40 zur galvanischen Trennung des Stromrichters 14 vom Gleichstromantrieb 12 vorgesehen.

Die Halbleiterschalter 16, 18, 20, 22, 24, 26 des Stromrichters 14 werden von jeweiligen Teilen 28, 30 einer Ansteuervorrichtung angesteuert. Die Zündimpulse werden aus einem jeweiligen Pulssignal und einem Stromrichtungssignal generiert. Diese Signale werden in diesem Beispiel den Teilen 28, 30 der Ansteuervorrichtung über deren Eingänge 44, 48 beziehungsweise 42, 46 von einer Rechenvorrichtung 54 bereitgestellt. Die Rechenvorrichtung 54 ist ein Steuergerät, durch welches eine Vielzahl der für den Betrieb der Antriebsvorrichtung benötigten Funktionalitäten realisiert ist.

Neben mehreren steuerungstechnischen benötigten aber in dieser Figur nicht angedeuteten Funktionalitäten ist die Rechenvorrichtung 54 auch dafür vorgesehen, ein "Safe Torque Off" Signal 56 zu empfangen, welches beispielsweise mittels eines Notaus-Schalters gegeben werden kann. Im Falle eines Gebens eines "Safe Torque Off" Signals wird eine Zeitfunktion für ein erstes Zeitintervall gestartet und der Stromabbau wird durch Vorgeben der Wechselrichtergrenzlage, also einem derartigen Einstellen der Ausgangsspannung des Stromrichters, dass der ausgangsseitige Strom möglichst schnell zu null abklingt, eingeleitet. Nach Ablauf dieses Zeitintervalls werden die der Rechenvorrichtung 54 zur Verfügung gestellten und mittels einer Messvorrichtung 52 kontinuierlich erfassten Werte des im Betrieb der Vorrichtung ausgangsseitig fließenden Stromes 50 ausgewertet.

Fernerhin wird nach Ablauf des ersten Zeitintervalls eine Zeitfunktion für ein zweites Zeitintervall gestartet. Innerhalb des zweiten Zeitintervalls erfolgt eine Überprüfung, ob der ausgangseitig fließende Strom 50 unterhalb eines sicherheitskritischen Grenzwertes abgeklungen ist, so dass das treibende Moment der Antriebsvorrichtung null beziehungsweise nahe null ist.

Für den Fall, dass ein derartiges Abklingen nach Ablauf des zweiten Zeitintervalls von beispielsweise 100ms erfolgt ist, wird auf ein Betätigen der ein- und ausgangsseitig vorgesehenen Unterbrechungsvorrichtungen 38, 40 verzichtet, da dies nicht sicherheitsrelevant ist. Es werden nur die Pulssignale und Stromrichtungssignale unterdrückt.

Für den Fall aber, dass der ausgangsseitig fließende Strom 50 nach Ablauf des zweiten Zeitintervalls noch nicht sicherheitstechnisch hinreichend abgeklungen ist, wird von der Rechenvorrichtung 54 über eine nicht gezeigte Datenverbindung ein Öffnen der Unterbrechungsvorrichtungen 38, 40 initiiert. Hierdurch wird der Stromrichter 14 galvanisch vom Versorgungsnetz 34 und/oder von der Antriebsvorrichtung 12 getrennt. Somit ist sichergestellt, dass der ausgangsseitig fließende Strom 50 endgültig unterbrochen ist und das treibende Moment des Gleichstromantriebes 12 auf null reduziert ist. Daher ist auch für den Fall, dass der ausgangsseitig fließende Strom auch nach Ablauf des zweiten Zeitintervalls nicht zu null abgeklungen ist, eine sicherheitsrelevante Abschaltung des Gleichstromantriebes 12 gegeben.

Fig. 2 zeigt einen exemplarischen Zeitablauf in einer Darstellung 60. Zu einem Zeitpunkt t0, gekennzeichnet mit der Bezugsziffer 62, wird von einem Versorgungssystem ein STO Signal empfangen. Eine Zeitfunktion für ein erstes Zeitintervall 68 wird gestartet, deren Ende auf einen Zeitpunkt t1 fällt, welcher mit der Bezugsziffer 64 gekennzeichnet ist. Mit Beginn des ersten Zeitintervalls werden die Zündimpulse der Ansteuervorrichtung 28, 30 in Wechselrichtergrenzlage geschoben, so dass sich ein ausgangsseitiger Strom abbauen kann. In einem sich anschließenden zweiten Zeitintervall 70, welches sich bis zu einem Zeitpunkt t2, gekennzeichnet mit der Bezugsziffer 66, erstreckt, erfolgt eine Überprüfung, ob der ausgangsseitige Strom unterhalb eines sicherheitskritischen Wert gefallen ist. Ist dies bis zum Zeitpunkt t2 nicht der Fall, wird zum Zeitpunkt t2 ein Öffnen jeweiliger Unterbrechungsvorrichtungen initiiert. Ansonsten wird ausschließlich die Zuführung von Ansteuerenergie an den betreffenden Stromrichter unterbrochen. Das erste Zeitintervall 68 beträgt beispielsweise 400ms, während das zweite Zeitintervall 70 beispielsweise 150ms beträgt.

### Bezugszeichenliste

- 10: exemplarisches Versorgungssystem für einen Gleichstromantrieb
- 12: Gleichstromantrieb
- 14: Stromrichter
- 16: erster Halbleiterschalter von Stromrichter
- 18: zweiter Halbleiterschalter von Stromrichter
- 20: dritter Halbleiterschalter von Stromrichter
- 22: vierter Halbleiterschalter von Stromrichter
- 24: fünfter Halbleiterschalter von Stromrichter
- 26: sechster Halbleiterschalter von Stromrichter
- 28: erster Teil von Ansteuervorrichtung
- 30: zweiter Teil von Ansteuervorrichtung
- 32: eingangsseitiger Anschluss
- 34: Versorgungsnetz
- 36: ausgangsseitiger Anschluss
- 38: eingangsseitige Unterbrechungsvorrichtung
- 40: ausgangsseitige Unterbrechungsvorrichtung
- 42: erster Eingang für Stromrichtungssignal
- 44: erster Eingang für Pulssignal
- 46: zweiter Eingang für Stromrichtungssignal
- 48: zweiter Eingang für Pulssignal
- 50: ausgangsseitig fließender Strom
- 52: Messvorrichtung
- 54: Rechenvorrichtung
- 56: STO Signal
- 60: exemplarischer Zeitablauf
- 62: Zeitpunkt des Empfangen eines STO Signals
- 64: Zeitpunkt des Beginns der Überprüfung, ob Strom abgeklungen ist
- 66: Zeitpunkt des Endes der Überprüfung, ob Strom abgeklungen ist
- 68: erstes Zeitintervall
- 70: zweites Zeitintervall

## Patentansprüche

1. Versorgungssystem (10) für einen Gleichstromantrieb (12), umfassend
• einen Stromrichter (14) für wenigstens einen richtungsabhängigen Zweiquadrantenbetrieb,
• wenigstens eine zugehörige pulsbasierte Ansteuervorrichtung (28, 30),
• einen eingangsseitigen (32) Anschluss zum Anschließen des Stromrichters (14) an ein Versorgungsnetz (34), und einen ausgangsseitigen (36) Anschluss zum Anschließen des Stromrichters (14) an einen Gleichstromantrieb (12),
• wenigstens eine mechanische Unterbrechungsvorrichtung (38, 40) für den ein-(32) und/oder ausgangsseitigen (36) Anschluss,
• wobei das Versorgungssystem dafür vorgesehen ist, kontinuierlich Werte eines im Betrieb ausgangsseitig fließenden Stromes (50) bereit zu stellen,
wobei das Versorgungssystem folgende Schritte ausführt:
• Empfangen eines *Safe Torque Off* (STO) (56) Signals,
• *im Falle des Empfangens eines Safe Torque Off (STO) Signals (56) unmittelbares Einstellen der Ausgangsspannung des Stromrichters derart, dass bereits innerhalb eines ersten Zeitintervalls der ausgangsseitig fließende Strom bereits auf null oder zumindest unterhalb eines nahe null liegenden sicherheitskritischen Grenzwertes gebracht ist*, **dadurch gekennzeichnet, dass**
• nach Ablauf *des* mit dem Empfang (62) des Safe Torque Off (STO) Signals (56) beginnenden ersten Zeitintervalls (68) Unterbrechen *des Gebens von Pulsen an den Stromrichter (14) und*/*oder* Unterbrechen *des Gebens eines Stromrichtungssignals an den Stromrichter (14), so dass eine* Unterbrechung einer Zuführung von Ansteuerenergie durch die Ansteuervorrichtung (28, 30) in den Stromrichter (14) bewirkt ist,
• Geben eines Unterbrechungssignals an die wenigstens eine mechanische Unterbrechungsvorrichtung (38, 40) für genau den Fall, dass nach Ablauf eines zweiten nachfolgenden Zeitintervalls (70) der ausgangsseitig fließende Strom (50) nicht unterhalb - eines sicherheitskritischen Grenzwertes abgeklungen ist.

2. Versorgungssystem nach Anspruch 1, **dadurch gekennzeichnet, dass** ausgangsseitig eine Messvorrichtung (52) zur Erfassung einer jeweiligen ersten Kenngröße für den ausgangsseitig fließenden Strom (50) vorgesehen ist.

3. Versorgungssystem nach Anspruch 1 oder 2, **dadurch gekennzeichnet, dass** eingangsseitig eine Messvorrichtung (52) vorgesehen ist, anhand deren gemessener Werte eine jeweilige zweite Kenngröße für den ausgangsseitig fließenden Strom (50) ermittelbar ist.

4. Versorgungssystem nach Anspruch 3, **dadurch gekennzeichnet dass** als Kriterium für ein Abklingen des ausgangsseitig fließenden Stromes (50) unterhalb des sicherheitskritischen Grenzwertes eine logische UND Verknüpfung eines jeweiligen Unterschreitens von erster und zweiter Kenngröße verwendet wird.

5. Versorgungssystem nach einem der vorherigen Ansprüche, **dadurch gekennzeichnet, dass** der Stromrichter (14) für einen Vierquadrantenbetrieb vorgesehen ist.

6. Versorgungssystem nach einem der vorherigen Ansprüche, **dadurch gekennzeichnet, dass** ein Erkennen des Abklingens des ausgangsseitig fließenden Stromes (50) unterhalb des sicherheitskritischen Grenzwertes anhand von Spannungsmessungen über den Halbleiterschaltern (16, 18, 20, 22, 24, 26) des Stromrichters (14) erfolgt.

7. Versorgungssystem nach einem der vorherigen Ansprüche, **dadurch gekennzeichnet, dass** dieses eingangsseitig für eine dreiphasige Einspeisung (34) vorgesehen ist.

8. Versorgungssystem nach einem der vorherigen Ansprüche, **dadurch gekennzeichnet, dass** dieses dafür vorgesehen ist, zwei voneinander unabhängige Safe Torque Off (STO) Signale (56) zu empfangen und zu berücksichtigen.

9. Versorgungssystem nach einem der vorherigen Ansprüche, **dadurch gekennzeichnet, dass** das erste Zeitintervall (68) im Bereich von 50ms bis 500ms liegt.

10. Verfahren zur sicherheitsrelevanten Abschaltung eines Gleichstromantriebs (12) in einem Versorgungssystem für einen Gleichstromantrieb (12), umfassend
• einen Stromrichter (14) für wenigstens einen richtungsabhängigen Zweiquadrantenbetrieb mit pulsbasierter Ansteuervorrichtung,
• einen eingangsseitigen (32) Anschluss zum Anschließen des Stromrichters (14) an ein Versorgungsnetz (34), und einen ausgangsseitigen (36) Anschluss zum Anschließen des Stromrichters (14) an einen Gleichstromantrieb (12),
• wenigstens eine mechanische Unterbrechungsvorrichtung (38, 40) für den ein-(32) und/oder ausgangsseitigen (36) Anschluss,
• wobei das Versorgungssystem dafür vorgesehen ist, kontinuierlich Werte vom ausgangsseitig fließenden Strom (50) bereit zu stellen,
• wobei ein Gleichstromantrieb (12) ausgangsseitig mit dem Stromrichter verbunden ist und von diesem betrieben wird,
durch folgende Schritte:
• Empfangen eines *Safe Torque Off* (STO) (56) Signals,
• *im Falle des Empfangens eines Safe Torque Off (STO) Signals (56) unmittelbares Einstellen der Ausgangsspannung des Stromrichters derart*, *dass bereits innerhalb eines ersten Zeitintervalls der ausgangsseitig fließende Strom bereits auf null oder zumindest unterhalb eines nahe null liegenden sicherheitskritischen Grenzwertes gebracht ist,* **gekennzeichnet durch** folgende Schritte:
• nach Ablauf *des* mit dem Empfang (62) des Safe Torque Off (STO) Signals (56) beginnenden ersten Zeitintervalls (68) Unterbrechen *des Gebens von Pulsen an den Stromrichter (14) und*/*oder* Unterbrechen *des Gebens eines Stromrichtungssignals an den Stromrichter (14), so dass eine* Unterbrechung einer Zuführung von Ansteuerenergie durch die Ansteuervorrichtung (28, 30) in den Stromrichter (14) bewirkt ist,
• Geben eines Unterbrechungssignals an die wenigstens eine mechanische Unterbrechungsvorrichtung (38, 40) für genau den Fall, dass nach Ablauf eines zweiten nachfolgenden Zeitintervalls (70) der ausgangsseitig fließende Strom (50) nicht unterhalb eines sicherheitskritischen Grenzwertes abgeklungen ist.

## Claims

1. Power supply system (10) for a direct-current drive (12), comprising
• a power converter (14) for at least one direction-dependent two-quadrant operating mode,
• at least one associated pulse-based actuation device (28, 30),
• an input-side connection (32) for connecting the power converter (14) to a power supply grid (34),
• and an output-side connection (36) for connecting the power converter (14) to a direct-current drive (12),
• at least one mechanical interruption device (38, 40) for the input-side connection (32) and/or the output-side connection (36),
• wherein the power supply system is provided to continually provide values of a current (50) flowing on the output side during operation,
wherein
the power supply system performs the following steps:
• receiving a safe torque off (STO) (56) signal,
• in the event of receiving a safe torque off (STO) signal (56), immediately adjusting the output voltage of the power converter such that the current flowing on the output side is brought down to zero or at least below a safety-critical limit value close to zero already within a first time interval, **characterized in that**
• once the first time interval (68), which begins when the safe torque off (STO) signal (56) is received (62), has elapsed, interrupting the output of pulses to the power converter (14) and/or interrupting the output of a current-direction signal to the power converter (14), with the result that a feed of actuation power through the actuation device (28, 30) into the power converter (14) is interrupted,
• supplying an interruption signal to the at least one mechanical interruption device (38, 40) for precisely the case in which, once a second subsequent time interval (70) has elapsed, the current (50) flowing on the output side has not decayed below a safety-critical limit value.

2. Power supply system according to Claim 1, **characterized in that** a measuring device (52) for detecting a respective first characteristic variable for the current (50) flowing on the output side is provided on the output side.

3. Power supply system according to Claim 1 or 2, **characterized in that** a measuring device (52) is provided on the input side, it being possible to determine a respective second characteristic variable for the current (50) flowing on the output side on the basis of the measured values of said measuring device.

4. Power supply system according to Claim 3, **characterized in that**, a logic AND operation of a respective undershoot of first and second characteristic variables is used as criterion for a decay of the current (50) flowing on the output side below the safety-critical limit value.

5. Power supply system according to any of the preceding claims, **characterized in that** the power converter (14) is provided for a four-quadrant operating mode.

6. Power supply system according to any of the preceding claims, **characterized in that** the decay of the current (50) flowing on the output side below the safety-critical limit value is identified on the basis of voltage measurements across the semiconductor switches (16, 18, 20, 22, 24, 26) of the power converter (14).

7. Power supply system according to any of the preceding claims, **characterized in that** said system is provided on the input side for a three-phase infeed (34).

8. Power supply system according to any of the preceding claims, **characterized in that** said system is provided to receive and to take into account two mutually independent safe torque off (STO) signals (56).

9. Power supply system according to any of the preceding claims, **characterized in that** the first time interval (68) is in the range from 50 ms to 500 ms.

10. Method for safety-related disconnection of a direct-current drive (12) in a power supply system for a direct-current drive (12), comprising
• a power converter (14) for at least one direction-dependent two-quadrant operating mode with pulse-based actuation device,
• an input-side connection (32) for connecting the power converter (14) to a power supply grid (34),
• and an output-side connection (36) for connecting the power converter (14) to a direct-current drive (12),
• at least one mechanical interruption device (38, 40) for the input-side connection (32) and/or the output-side connection (36),
• wherein the power supply system is provided to continually provide values of the current (50) flowing on the output side,
• wherein a direct-current drive (12) is connected to the power converter on the output side and is operated by said power converter,
by means of the following steps:
• receiving a safe torque off (STO) (56) signal,
• in the event of receiving a safe torque off (STO) signal (56), immediately adjusting the output voltage of the power converter such that the current flowing on the output side is brought down to zero or at least below a safety-critical limit value close to zero already within a first time interval, **characterized by** the following steps:
• once the first time interval (68), which begins when the safe torque off (STO) signal (56) is received (62), has elapsed, interrupting the output of pulses to the power converter (14) and/or interrupting the output of a current-direction signal to the power converter (14), with the result that a feed of actuation power through the actuation device (28, 30) into the power converter (14) is interrupted,
• supplying an interruption signal to the at least one mechanical interruption device (38, 40) for precisely the case in which, once a second subsequent time interval (70) has elapsed, the current (50) flowing on the output side has not decayed below a safety-critical limit value.

## Revendications

1. Système d'alimentation (10), destiné à un entraînement à courant continu (12), comprenant
• un convertisseur de puissance (14) destiné à au moins un fonctionnement dans deux quadrants selon la direction,
• au moins un dispositif de commande à impulsions associé (28, 30),
• un raccord côté entrée (32) destiné à raccorder le convertisseur (14) à un réseau d'alimentation (34), et un raccord côté sortie (36) destiné à raccorder le convertisseur de puissance (14) à un entraînement à courant continu (12),
• au moins un dispositif d'interruption mécanique (38, 40) destiné au raccord côté entrée (32) et/ou au raccord côté sortie (36),
• le système d'alimentation étant prévu pour produire en continu des valeurs d'un courant (50) circulant côté sortie en fonctionnement,
le système d'alimentation mettant en oeuvre les étapes suivantes :
• recevoir un signal Safe Torque Off (STO) (56),
• en cas de réception d'un signal Safe Torque Off (STO) (56), régler immédiatement la tension de sortie du convertisseur de puissance de telle sorte que, déjà dans un premier intervalle de temps, le courant circulant côté sortie soit déjà à zéro ou au moins au-dessous d'une valeur limite quasi-nulle critique pour la sécurité, **caractérisé en ce que**
• après l'expiration du premier intervalle de temps (68) commençant avec la réception (62) du signal Safe Torque Off (STO) (56), interrompre la délivrance d'impulsions au convertisseur de puissance (14) et/ou interrompre la délivrance d'un signal de direction de courant au convertisseur de puissance (14) de sorte qu'une interruption d'un apport d'énergie de commande soit provoquée par le dispositif d'entraînement (28, 30) dans le convertisseur de puissance (14),
• délivrer un signal d'interruption à l'au moins un dispositif d'interruption mécanique (38, 40) pour le cas précis où, après l'expiration d'un deuxième intervalle de temps suivant (70), le courant (50) circulant côté sortie ne décroît pas au-dessous d'une valeur limite critique pour la sécurité.

2. Système d'alimentation selon la revendication 1, **caractérisé en ce qu'**il est prévu, du côté sortie, un dispositif de mesure (52) destiné à détecter un premier paramètre respectif caractéristique du courant (50) circulant côté sortie.

3. Système d'alimentation selon la revendication 1 ou 2, **caractérisé en ce qu'**il est prévu, du côté entrée, un dispositif de mesure (52) permettant de déterminer, sur la base de ses valeurs mesurées, un deuxième paramètre respectif caractéristique du courant (50) circulant côté sortie.

4. Système d'alimentation selon la revendication 3, **caractérisé en ce qu'**une opération logique ET de franchissement vers le bas respectif des premier et deuxième paramètres caractéristiques est utilisée comme critère de décroissance du courant (50) circulant côté sortie au-dessous de la valeur limite critique pour la sécurité.

5. Système d'alimentation selon l'une des revendications précédentes, **caractérisé en ce que** le convertisseur de puissance (14) est prévu pour un fonctionnement dans quatre quadrants.

6. Système d'alimentation selon l'une des revendications précédentes, **caractérisé en ce qu'**une détection de la décroissance du courant (50) circulant côté sortie au-dessous de la valeur limite critique pour la sécurité est effectuée sur la base de mesures de tension aux bornes des commutateurs à semi-conducteur (16, 18, 20, 22, 24, 26) du convertisseur de puissance (14) .

7. Système d'alimentation selon l'une des revendications précédentes, **caractérisé en ce que** celui-ci est prévu du côté entrée d'une alimentation triphasée (34) .

8. Système d'alimentation selon l'une des revendications précédentes, **caractérisé en ce que** celui-ci est destiné à recevoir et à prendre en compte deux signaux Safe Torque Off (STO) indépendants (56).

9. Système d'alimentation selon l'une des revendications précédentes, **caractérisé en ce que** le premier intervalle de temps (68) est de l'ordre de 50 ms et 500 ms.

10. Procédé de déconnexion, liée à la sécurité, d'un entraînement à courant continu (12) dans un système d'alimentation d'un entraînement à courant continu (12) qui comprend
• un convertisseur de puissance (14) destiné au moins à un fonctionnement dans deux quadrants selon la direction et comprenant un dispositif de commande à impulsions,
• un raccord côté entrée (32) destiné à raccorder le convertisseur de puissance (14) à un réseau d'alimentation (34), et un raccord côté sortie (36) destiné à raccorder le convertisseur de puissance (14) à un entraînement à courant continu (12),
• au moins un dispositif d'interruption mécanique (38, 40) destiné au raccord côté entrée (32) et/ou au raccord côté sortie (36),
• le système d'alimentation étant prévu pour produire en continu des valeurs à partir du courant (50) circulant côté sortie,
• un entraînement à courant continu (12) étant raccordé côté sortie au convertisseur de puissance et étant mis en fonctionnement par celui-ci,
le procédé comprenant les étapes suivantes :
• recevoir un signal Safe Torque Off (STO) (56),
• en cas de réception d'un signal Safe Torque Off (STO) (56), régler immédiatement la tension de sortie du convertisseur de puissance de telle sorte que, déjà dans un premier intervalle de temps, le courant circulant côté sortie soit déjà à zéro ou au moins au-dessous d'une valeur limite quasi-nulle critique pour la sécurité, **caractérisé par** le étapes suivantes :
• après l'expiration du premier intervalle de temps (68) commençant avec la réception (62) du signal Safe Torque Off (STO) (56), interrompre la délivrance d'impulsions au convertisseur de puissance (14) et/ou interrompre la délivrance d'un signal de direction de courant au convertisseur de puissance (14) de sorte qu'une interruption d'un apport d'énergie de commande soit provoquée par le dispositif d'entraînement (28, 30) dans le convertisseur de puissance (14),
• délivrer un signal d'interruption à l'au moins un dispositif d'interruption mécanique (38, 40) pour le cas précis où, après l'expiration d'un deuxième intervalle de temps suivant (70), le courant (50) circulant côté sortie ne décroît pas au-dessous d'une valeur limite critique pour la sécurité.
